# DEMANDE DE BREVET EUROPEEN

(11) **EP 3 007 046 A2**
(43) Date de publication de la demande: **13.04.2016**
(21) Numéro de dépôt: 15188678.5
(22) Date de dépôt: 07.10.2015
(51) Int. Cl.: G06F 3/044, H04B 5/00, H04B 13/00, G06F 3/041, H01Q 1/00, H04W 4/00

(54) **SYSTEME D'IDENTIFICATION ET D'ECHANGES DE DONNEES COMPORTANT UN DISPOSITIF CAPACITIF PORTABLE ET UN ECRAN TACTILE CAPACITIF**

(30) Priorité: 10.10.2014 FR 1402279
(71) Demandeur: THALES, 92400 Courbevoie (FR)
(72) Inventeur: CONI, Philippe, 33127 Saint Jean d'Illac (FR); DOMINICI, Johanna, 33187 Le Haillan Cedex (FR); ABADIE, Jean-Christophe, 33380 Biganos (FR)
(74) Mandataire: Bréda, Jean-Marc

(57) **Abrégé**

Le domaine général de l'invention est celui des systèmes comportant un écran tactile capacitif (100). Le système selon l'invention comporte un dispositif capacitif portable (200) destiné, en mode opérationnel, à être porté par un utilisateur. L'écran tactile fonctionne à au moins une première fréquence. Le système fonctionne selon au moins un premier mode d'identification dans lequel le dispositif portable comporte des moyens d'émission (210, 220, 230) d'un premier signal périodique analogique émis à une seconde fréquence dite fréquence « d'identification » différente de la première fréquence, ladite fréquence étant dans une gamme de fréquences transmises par le corps humain, ledit premier signal étant unique et associé à l'utilisateur. L'écran tactile portable comporte des premiers moyens de détection et d'identification dudit premier signal et des seconds moyens d'autorisation ou de refus d'accès à des applications prédéterminées de l'écran tactile, fonctions de l'identification de l'utilisateur. D'autres modes de fonctionnement du système sont possibles.

## Description

Le domaine de l'invention est celui des dispositifs de visualisation comportant un écran tactile capacitif. Le domaine plus particulier de l'invention se situe dans celui des échanges d'informations avec l'écran tactile, permettant entre autres la reconnaissance sécurisée de l'utilisateur. Tous les domaines d'applications nécessitant ce type d'échanges sont concernés. On citera le domaine grand public mais aussi le domaine des transports de toutes nature, automobiles, aéronautiques, ferroviaires ou maritimes.

Les systèmes tactiles actuels ne permettent pas d'identifier directement les personnes effectuant des interactions. Ainsi, sur un écran partagé, il n'est pas possible de distinguer l'appui d'une première personne de l'appui d'une seconde personne, tout comme il n'est pas possible de rejeter l'appui d'une troisième personne, non autorisée à utiliser le système. De la même façon, la présence involontaire d'un objet conducteur sur une dalle capacitive peut provoquer un appui intempestif.

Ce problème d'identification de l'utilisateur peut être traité indirectement grâce à un lecteur d'empreintes digitales, tel qu'on peut le trouver sur les téléphones portables de marque « IPhone 5 » commercialisés par la société « Apple », mais rien n'interdit à un tiers d'utiliser l'écran, une fois qu'il a été déverrouillé. En fait, le système ne reconnaît l'operateur qu'une seule fois, et ceci au moment du déverrouillage.

Pour atteindre une sécurisation totale, il faut pouvoir détecter et reconnaître l'operateur lorsqu'il interagit avec l'écran tactile avec un ou plusieurs doigts, et il faut également détecter et reconnaître d'autres opérateurs opérant simultanément ou séparément, avec un ou plusieurs doigts, sur le même écran. Le système d'identification et d'échanges de données selon l'invention assure cette fonction. Plus précisément, l'invention a pour objet un système d'identification et d'échanges de données comportant un dispositif capacitif portable et un écran tactile capacitif, ledit dispositif capacitif portable destiné, en mode opérationnel, à être porté par un utilisateur, l'écran tactile fonctionnant à au moins une première fréquence,
caractérisé en ce que ledit système fonctionne selon au moins un premier mode d'identification,
- le dispositif portable comportant au moins des moyens d'émission d'un premier signal périodique analogique, ledit premier signal étant émis à au moins une seconde fréquence dite fréquence « d'identification », la dite seconde fréquence étant différente de la première fréquence, ladite fréquence étant dans une gamme de fréquences transmises par le corps humain, ledit premier signal étant unique et associé à l'utilisateur ;
- l'écran tactile portable comportant des premiers moyens de détection et d'identification dudit premier signal et des seconds moyens d'autorisation ou de refus d'accès à des applications prédéterminées de l'écran tactile, fonctions de l'identification de l'utilisateur.

Avantageusement, le système fonctionne selon au moins un second mode d'échanges de données numériques,
- le dispositif portable comportant des moyens d'émission d'un second signal périodique analogique représentatif de premières données numériques, ledit second signal étant émis à au moins une fréquence différente de la première fréquence et des moyens de réception et d'analyse d'un troisième signal reçu issu de l'écran tactile représentatif de secondes données numériques, ledit troisième signal étant émis à au moins une fréquence différente de la première fréquence ;
- l'écran tactile capacitif comportant des moyens de réception et d'analyse du second signal et des moyens d'émission du troisième signal.

Avantageusement, le dispositif capacitif portable comporte des moyens propres de mise à la masse.

Avantageusement, les différentes fréquences émises par le dispositif capacitif portable et /ou l'écran tactile capacitif sont orthogonales.

Avantageusement, le dispositif capacitif portable comporte au moins un capteur d'analyse d'au moins un paramètre vital de l'utilisateur et l'écran tactile capacitif comporte au moins une application spécifique, fonction dudit paramètre vital.

Avantageusement, le dispositif capacitif portable comporte des moyens haptiques ou visuels d'interaction avec l'utilisateur.

Avantageusement, le dispositif capacitif portable comporte des moyens d'interaction avec un système de détection de position ou d'orientation, agencés de façon à détecter sa posture par rapport à un référentiel connu.

Avantageusement, le dispositif capacitif portable comporte des moyens d'interaction avec un oculomètre, agencés de façon à détecter la direction du regard de l'utilisateur.

Avantageusement, le dispositif capacitif portable comporte des moyens d'échanges de données avec au moins un second écran tactile capacitif.

Avantageusement, le dispositif capacitif portable comporte une batterie rechargeable.

Avantageusement, le dispositif capacitif portable est en forme d'anneau destiné à être porté au poignet ou au doigt de l'utilisateur. Il peut être également en forme de stylet ou de stylo.

L'invention sera mieux comprise et d'autres avantages apparaîtront à la lecture de la description qui va suivre donnée à titre non limitatif et grâce aux figures annexées parmi lesquelles :
La figure 1 représente le mode de fonctionnement d'un système d'identification et d'échanges de données selon l'invention ;
La figure 2 représente les différentes fréquences utilisées dans un système d'identification et d'échanges de données selon l'invention ;
la figure 3 représente un schéma électronique d'un système d'identification et d'échanges de données selon l'invention.

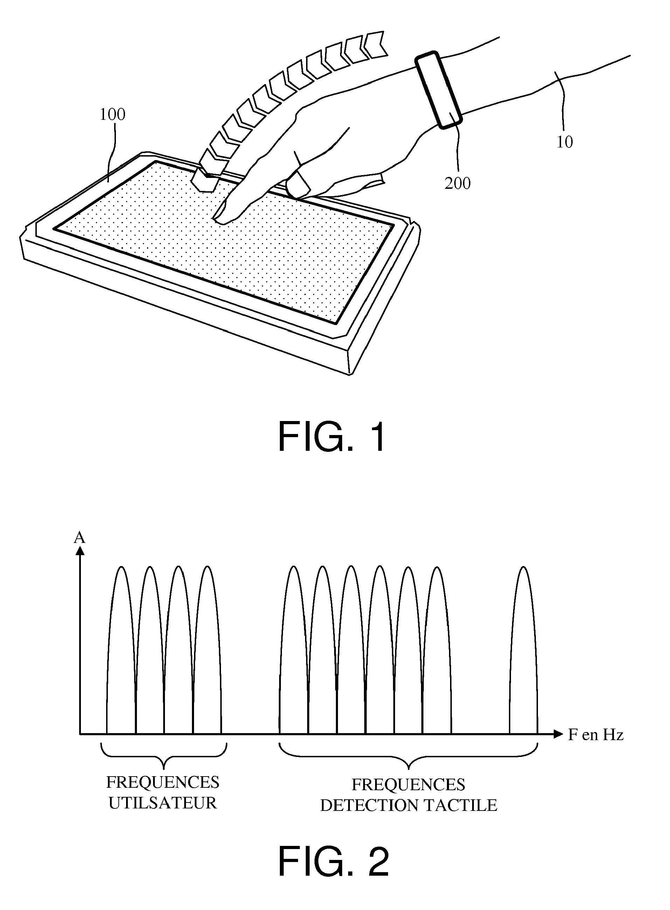

A titre d'exemple non limitatif, la figure 1 représente une vue d'un système selon l'invention. Un système d'identification et d'échanges de données selon l'invention comporte essentiellement un écran tactile capacitif 100 et un dispositif capacitif portable 200 porté par un utilisateur 10.

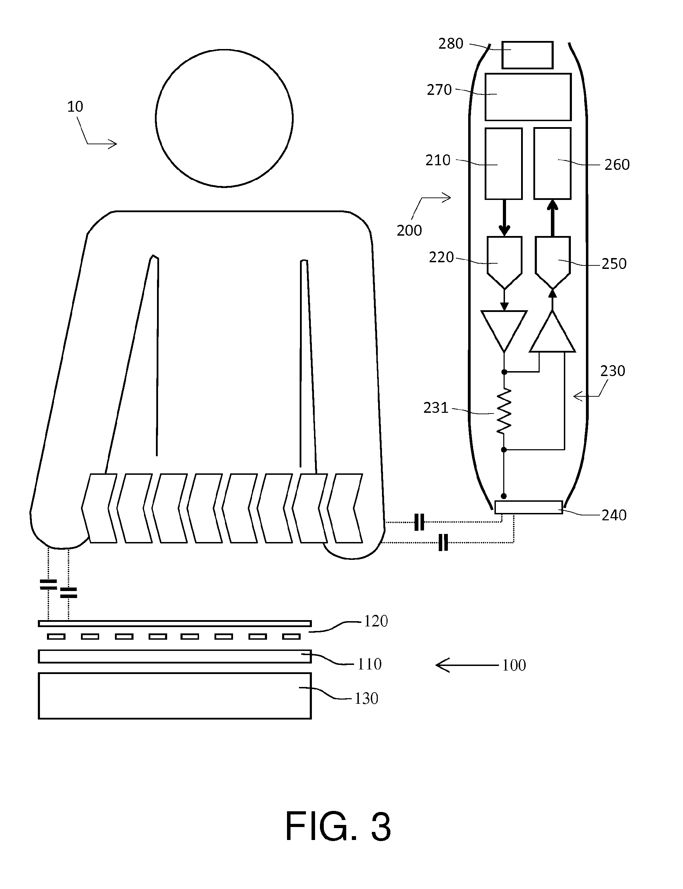

Comme on le voit sur la figure 3, l'écran tactile capacitif 100 comprend un écran de visualisation 110, une dalle tactile matricielle 120 et son électronique dédiée 130. La matrice 120 est composée de lignes et de colonnes conductrices réalisées habituellement en « ITO », acronyme de « Indium Tin Oxyde ». Typiquement, une telle surface tactile peut posséder une cinquantaine de colonnes et une trentaine de lignes pour un écran de planche de bord avionique. La partie électronique dédiée 130 comporte essentiellement :
- des moyens d'émission de premiers signaux périodiques destinés à alimenter les lignes et les colonnes ;
- des moyens de réception de seconds signaux périodiques issus des lignes et des colonnes ;
- des moyens de traitement numérique des signaux reçus permettant de déterminer les variations de capacité induites au niveau des lignes et des colonnes de la matrice, permettant ainsi de localiser les contacts de l'utilisateur avec la dalle tactile;
- une interface d'entrées-sorties avec l'écran de visualisation 110 permettant de gérer les applications en fonction des contacts détectés.

La détection d'appui peut se faire en mode dit « self-capacitance » et/ou en mode « mutual capacitance ». Le premier mode consiste à lire les lignes et les colonnes du réseau de touches de la matrice. Le second mode consiste à lire chaque intersection du réseau de lignes et de colonnes de la matrice. Le premier mode permet de scruter rapidement la surface tactile et de repérer les coordonnées possibles des appuis. Le second mode permet de départager les appuis réels des appuis « fantômes ».

La surface tactile selon l'invention comporte de plus des moyens spécifiques. Ce sont :
- des premiers moyens de détection et d'identification d'un premier signal externe représentatif d'un utilisateur ;
- des seconds moyens d'autorisation ou de refus d'accès à des applications prédéterminées de l'écran tactile, fonctions de l'identification dudit premier signal.

Le dispositif capacitif portable selon l'invention est porté par un utilisateur 10. Il a plusieurs fonctions. Toutes ces fonctions sont basées sur la capacité du dispositif capacitif portable à émettre et à recevoir des données numériques en utilisant les propriétés d'émission et de réception de signaux de la dalle tactile, et sur les propriétés de transmission des fréquences par le corps de l'utilisateur. Sur les figures 1 et 3, la transmission par le corps humain est symbolisé par une succession de chevrons. Sur la figure 2, les liaisons électriques entre l'utilisateur 10 et d'une part, le dispositif capacitif portable et d'autre part, la dalle tactile 100 sont représentés par des capacités électriques.

Le dispositif capacitif portable se présente sous la forme d'un anneau ou d'une bague ou d'un bracelet ou d'un gant en contact électrique avec l'utilisateur. On peut également le présenter sous forme de stylet ou de stylo. Sur la figure 1, le dispositif 200 est un anneau disposé autour du poignet de l'utilisateur 10. Il peut comporter différents interfaces avec l'utilisateur tel que des boutons de mise en service, des voyants lumineux, un écran d'affichage, des capteurs d'état ou encore des moyens de retour haptique.

Sa première fonction est une fonction d'identification de l'utilisateur. Sa seconde fonction est une fonction d'échanges de données avec la dalle tactile. Sa troisième fonction est une fonction d'interaction avec l'utilisateur.

Sa première fonction est de permettre l'identification de l'utilisateur lorsque celui-ci touche l'écran tactile capacitif. Cette identification est effectuée au moyen d'un signal envoyé par l'objet portable à la dalle tactile capacitive, ce signal étant propre à chaque utilisateur. Le signal d'identification est transmis par le corps de l'utilisateur jusque sous le bout de ses doigts. Une fois l'utilisateur identifié, le système alloue à l'utilisateur des privilèges associés. Il l'autorise, par exemple, à interagir sur une zone spécifique de l'écran, ou au contraire, lui interdit l'accès d'une zone, voire de la totalité de l'écran. Ainsi, les zones ou interacteurs critiques ne sont disponibles qu'aux utilisateurs disposant du signal d'identification autorisé.

La fréquence et la forme d'onde du signal fréquentiel émis sont adaptées à la transmission au travers du corps humain. Ce signal est démodulé par le contrôleur tactile de la surface tactile en même temps que les signaux de mesures capacitives. Les fréquences se situent dans une gamme de fréquences inférieures à 1 MHz.

Le dispositif capacitif portable dispose d'une électronique permettant de générer un signal d'une fréquence propre, sur laquelle un signal série est modulé. Ce signal peut être répétitif et contenir un identifiant, éventuellement suivi d'un container contenant un ensemble de données numériques.

Chaque dispositif capacitif portable émet sur une fréquence particulière, dans un domaine fréquentiel fini, que scrute en permanence le contrôleur tactile de la dalle tactile.

Le contrôleur tactile dispose de la faculté de démoduler en amplitude des signaux fréquentiels permettant la lecture des lignes et colonnes de l'écran tactile et dispose également de la capacité à démoduler les signaux en provenance du dispositif capacitif portable.

Comme on le voit sur la figure 2 qui représente l'amplitude A des signaux en fonction de leurs fréquences d'émission F, on définit donc un espace fréquentiel destiné aux dispositifs capacitifs portables et un second espace fréquentiel destiné à la mesure capacitive de la dalle tactile. Tout comme en transmission ADSL, ADSL signifiant « Assymetric Digital Subscriber Line », les fréquences sont avantageusement « orthogonales » et donc peuvent être démodulées indépendamment les unes des autres. Deux signaux sont dits à fréquences orthogonales si leur temps d'intégration est identique pour les différents moyens de démodulation de l'électronique de traitement, ce temps d'intégration étant un multiple exact de chacune des périodes.

Le dispositif capacitif portable n'est pas limité à la simple émission d'un code d'identification. Sa seconde fonction est d'échanger de l'information avec l'écran tactile.

Le dispositif portable comporte alors des moyens d'émission d'un signal périodique analogique représentatif de données numériques, ledit signal étant émis à une fréquence différente de la fréquence de mesure de la dalle tactile. Le dispositif portable comporte également des moyens de réception et d'analyse d'un signal reçu issu de l'écran tactile également représentatif de données numériques.

L'écran tactile capacitif comporte des moyens de réception et d'analyse du signal issu du dispositif portable et des moyens d'émission de son propre signal de données.

A titre d'exemple d'application, le dispositif capacitif portable peut être relié à une mémoire externe, un téléphone portable ou « smartphone » ou à toute autre source numérique d'informations et permettre ainsi le transfert de ce contenu vers l'écran tactile.

De la même façon, par l'intermédiaire d'une application dédiée sur un smartphone ou un dispositif numérique équivalent, l'utilisateur peut designer un contenu numérique avec son doigt pour assurer la fonction informatique « copier », puis placer son doigt sur l'écran tactile pour faire un « coller » dudit contenu.

Le dispositif portable peut encore avoir d'autres applications. Ainsi, le dispositif capacitif portable peut comporter un ou plusieurs capteurs d'analyse de paramètres vitaux ou de l'état émotionnel de l'utilisateur. L'écran tactile capacitif peut comporter une ou plusieurs applications spécifiques, fonction de ces paramètres vitaux ou de l'état émotionnel. Ainsi, le dispositif portable peut servir de moyen de surveillance de l'état de santé et/ou de vigilance de l'utilisateur et peut permettre une adaptation de l'écran tactile à cet état. On citera, comme exemple d'adaptations de l'écran tactile, la génération de vibrations, la modification de la symbologie affichée ou la génération de messages d'alerte spécifiques.

Réciproquement, l'écran tactile peut transmettre des messages soit de type haptique entrainant la vibration du dispositif portable, soit de type visuel entrainant l'allumage de voyants ou d'écrans de visualisation incorporés au dispositif portable, alertant ainsi l'utilisateur.

Le dispositif portable peut servir de moyen de validation couplé à un dispositif de détection de l'oeil ou de la direction du regard ou oculomètre encore connu sous la terminologie « Eye-Tracker », ce dernier permettant une désignation simple et rapide des objets à sélectionner. Ce mode de désignation est tout particulièrement adapté aux différents écrans de visualisation. Le dispositif capacitif portable peut également comporter des moyens d'interaction avec un système de détection de position et/ou d'orientation, agencés de façon à détecter sa posture par rapport à un référentiel connu.

La figure 3 représente les sous-ensembles essentiels de la partie électronique d'un dispositif portable selon l'invention. Elle comporte les différents moyens électroniques suivants :
- un générateur de tensions 210 ;
- un convertisseur DAC 220 ;
- un sous-ensemble analogique 230 d'émission-réception capable de générer et de recevoir des tensions sinusoïdales sur une partie conductrice 240. Dans le schéma de la figure 3, en mode de réception, le courant capacitif issu du générateur de la surface tactile est mesuré par une résistance 231 dont l'ordre de grandeur est typiquement de 1 KΩ ;
- un convertisseur ADC 250 ;
- des circuits de démodulations synchrones 260 ;
- des moyens de traitement numérique 270 des signaux issus des démodulations synchrones permettant de déterminer les variations de capacité induites au niveau des lignes et des colonnes de la matrice. Chaque démodulateur permet de délivrer l'amplitude et la phase du signal traité ;
- des moyens de mémorisation 280 des différentes données nécessaires au fonctionnement du dispositif portable et en particulier, le code d'identification propre à l'utilisateur.

Le potentiel électrique de référence des circuits analogiques 230 ou « masse » est relié à une partie conductrice extérieure en contact avec la main de l'opérateur pour obtenir l'indispensable retour de mode commun par la « terre ». Cette fonction peut être assurée naturellement par simple contact entre le dispositif et l'utilisateur à travers ses vêtements, son casque, ses chaussures ou par l'intermédiaire de son siège s'il est assis.

Le dispositif capacitif portable peut également comporter des moyens propres intégrés permettant de réaliser cette fonction. Un simple câble électrique de longueur appropriée suffit à assurer le retour à la masse. Cette longueur ne dépasse pas quelques centimètres.

L'alimentation électrique du dispositif portable peut se faire par une pile ou un accumulateur. Dans ce dernier cas, le dispositif portable peut être rechargé par induction ou par tout autre moyen de recharge sans fil ou sans contact. Cette alimentation n'est pas représentée sur la figure 3.

## Revendications

1. Système d'identification et d'échanges de données comportant un dispositif capacitif portable (200) et un écran tactile capacitif (100), ledit dispositif capacitif portable destiné, en mode opérationnel, à être porté par un utilisateur, l'écran tactile fonctionnant à au moins une première fréquence,
**caractérisé en ce que** ledit système fonctionne selon au moins un premier mode d'identification,
- le dispositif portable comportant au moins des moyens d'émission (210, 220, 230) d'un premier signal périodique analogique, ledit premier signal étant émis à au moins une seconde fréquence dite fréquence « d'identification », la dite seconde fréquence étant différente de la première fréquence, ladite fréquence étant dans une gamme de fréquences transmises par le corps humain, ledit premier signal étant unique et associé à l'utilisateur ;
- l'écran tactile portable comportant des premiers moyens de détection et d'identification dudit premier signal et des seconds moyens d'autorisation ou de refus d'accès à des applications prédéterminées de l'écran tactile, fonctions de l'identification de l'utilisateur ;
- les différentes fréquences émises par le dispositif capacitif portable et l'écran tactile capacitif étant orthogonales.

2. Système d'identification et d'échanges de données selon la revendication 1, **caractérisé en ce que** le système fonctionne selon au moins un second mode d'échanges de données numériques,
- le dispositif portable comportant des moyens d'émission d'un second signal périodique analogique représentatif de premières données numériques, ledit second signal étant émis à au moins une fréquence différente de la première fréquence et des moyens de réception et d'analyse d'un troisième signal reçu issu de l'écran tactile représentatif de secondes données numériques, ledit troisième signal étant émis à au moins une fréquence différente de la première fréquence ;
- l'écran tactile capacitif comportant des moyens de réception et d'analyse du second signal et des moyens d'émission du troisième signal.

3. Système d'identification et d'échanges de données selon l'une des revendications précédentes, **caractérisé en ce que** le dispositif capacitif portable comporte des moyens propres de mise à la masse.

4. Système d'identification et d'échanges de données selon l'une des revendications précédentes, **caractérisé en ce que** le dispositif capacitif portable comporte au moins un capteur d'analyse d'au moins un paramètre vital de l'utilisateur et **en ce que** l'écran tactile capacitif comporte au moins une application spécifique, fonction dudit paramètre vital.

5. Système d'identification et d'échanges de données selon l'une des revendications précédentes, **caractérisé en ce que** le dispositif capacitif portable comporte des moyens haptiques ou visuels d'interaction avec l'utilisateur.

6. Système d'identification et d'échanges de données selon l'une des revendications précédentes, **caractérisé en ce que** le dispositif capacitif portable comporte des moyens d'interaction avec un système de détection de position et/ou d'orientation, agencés de façon à détecter sa posture par rapport à un référentiel connu.

7. Système d'identification et d'échanges de données selon l'une des revendications précédentes, **caractérisé en ce que** le dispositif capacitif portable comporte des moyens d'interaction avec un oculomètre, agencés de façon à détecter la direction du regard de l'utilisateur.

8. Système d'identification et d'échanges de données selon l'une des revendications précédentes, **caractérisé en ce que** le dispositif capacitif portable comporte des moyens d'échanges de données avec au moins un second écran tactile capacitif.

9. Système d'identification et d'échanges de données selon l'une des revendications précédentes, **caractérisé en ce que** le dispositif capacitif portable comporte une batterie rechargeable.

10. Système d'identification et d'échanges de données selon l'une des revendications précédentes, **caractérisé en ce que** le dispositif capacitif portable est en forme d'anneau destiné à être porté au poignet ou au doigt de l'utilisateur.

11. Système d'identification et d'échanges de données selon l'une des revendications précédentes, **caractérisé en ce que** le dispositif capacitif portable est en forme de stylet ou de stylo.
